# EUROPÄISCHE PATENTSCHRIFT

(11) **EP 1 657 104 B1**
(45) Veröffentlichungstag und Bekanntmachung des Hinweises auf die Patenterteilung: **10.10.2007**
(21) Anmeldenummer: 05024371.6
(22) Anmeldetag: 09.11.2005
(51) Int. Cl.: B60K 31/02

(54) **Geschwindigkeitssteuervorrichtung und Verfahren zum Steuern einer Fahrzeuggeschwindigkeit**
Method and device for controlling vehicle speed
Procédé et dispositif pour controler la vitesse d'un véhicule

(30) Priorität: 12.11.2004 DE 102004054635
(43) Veröffentlichungstag der Anmeldung: 17.05.2006
(73) Patentinhaber: AUDI AG, 85045 Ingolstadt (DE)
(72) Erfinder: Hentschel, Jenika, 31141 Hildesheim (DE)
(74) Vertreter: Thielmann, Frank

(56) Entgegenhaltungen:
- DE-A1- 4 338 098
- DE-A1- 10 145 915
- DE-A1- 10 235 363
- DE-A1- 10 261 624
- DE-A1- 19 721 166
- US-B1- 6 704 637

## Beschreibung

Die vorliegende Erfindung betrifft eine Geschwindigkeitssteuervorrichtung für ein Fahrzeug gemäß dem Oberbegriff des Anspruchs 1. Darüber hinaus betrifft die Erfindung ein entsprechendes Verfahren zum Steuern einer Fahrzeuggeschwindigkeit.

Geschwindigkeitssteuervorrichtungen dienen zur Entlastung des Fahrers während einer Fahrt. Dabei gibt der Fahrer der Geschwindigkeitssteuervorrichtung einen von ihm gewünschten Geschwindigkeitswert als Geschwindigkeits-Sollwert vor. Die Geschwindigkeitssteuervorrichtung steuert das Fahrzeug daraufhin so, dass das Fahrzeug den vorgegebenen Geschwindigkeits-Sollwert nach Möglichkeit konstant fährt.

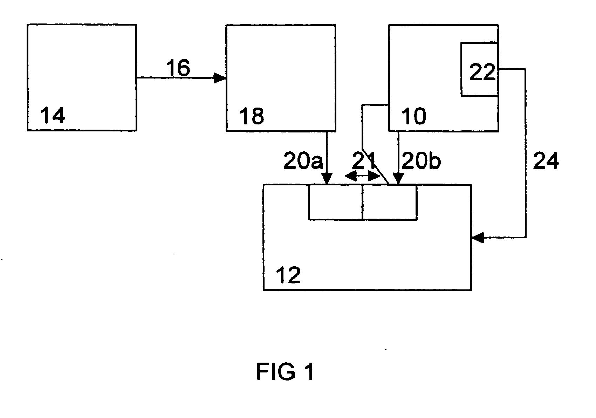

Zur Ausführung dieser Funktion umfasst eine bekannte Geschwindigkeitssteuervorrichtung eine Eingabeeinrichtung 10 und eine Steuereinrichtung 12, wie sie in Figur 1 skizziert sind. Zusätzlich umfasst die Geschwindigkeitssteuervorrichtung aus Figur 1 noch weitere Komponenten, welche später noch erläutert werden.

Über die Eingabeeinrichtung 10 aktiviert ein Fahrer die Geschwindigkeitssteuervorrichtung für einen von ihm vorgegebenen Geschwindigkeits-Sollwert 20b. Dazu ist die Eingabeeinrichtung 10 im Inneren des Fahrzeugs so angebracht, dass sie für den Fahrer auch während der Fahrt leicht erreichbar ist, beispielsweise am Lenkrad. Die Eingabeeinrichtung 10 gibt den Geschwindigkeits-Sollwert 20b an die Steuereinrichtung 12 weiter, welche das Fahrzeug dann so steuert, dass der vorgegebene Geschwindigkeits-Sollwert 20b innerhalb eines vorgebbaren Toleranzbereichs vom Fahrzeug gefahren wird.

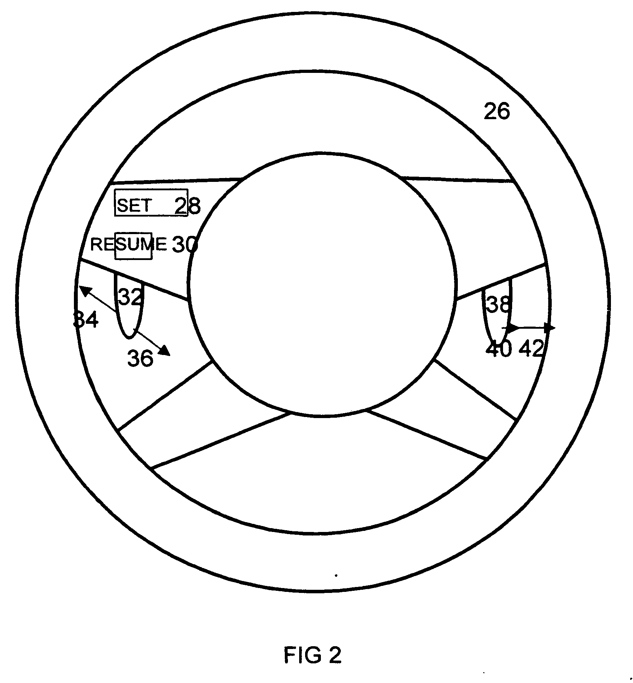

Zur besseren Erklärung einer Bedienung einer Geschwindigkeitssteuervorrichtung durch den Fahrer ist in Figur 2 die Eingabeeinrichtung einer Geschwindigkeitssteuervorrichtung dargestellt. Dabei umfasst diese Eingabeeinrichtung sowohl erfindungsgemäße Betätigungskomponenten als auch solche, die nach dem Stand der Technik schon bekannt sind. Letztere sollen in den folgenden Abschnitten genauer erläutert werden.

In Figur 2 ist an einem Lenkrad 26 eine mit der Bezeichnung SET markierte Taste 28 zu erkennen, über welche ein Fahrer die Geschwindigkeitssteuervorrichtung aktivieren und gleichzeitig auch den vom Fahrzeug beim Drücken der Taste 28 gefahrenen Geschwindigkeitswert als Geschwindigkeits-Sollwert vorgeben kann. Zusätzlich kann der Fahrer nach einer Aktivierung der Geschwindigkeitssteuervorrichtung den Geschwindigkeits-Sollwert ändern, indem er bei einer beliebigen Fahrzeuggeschwindigkeit die Taste 28 drückt. Die Geschwindigkeitssteuervorrichtung übernimmt dann die momentan gefahrene Geschwindigkeit als Geschwindigkeits-Sollwert.

Eine weitere Möglichkeit den von der Geschwindigkeitssteuervorrichtung eingestellten Geschwindigkeitswert zu verändern, bietet sich über die Betätigung des Hebels 32 aus Figur 2. Dieser Hebel 32 lässt sich zu einer als SPEED UP/DOWN bezeichneten Eingabe sowohl in die Fahrtrichtung 34 als auch in die Gegenfahrtrichtung 36 bewegen. Über das Drücken des Hebels 32 in die Fahrtrichtung 34 kann der Fahrer nach der Eingabe eines Geschwindigkeits-Sollwerts die Geschwindigkeit seines Fahrzeugs über den vorgegebenen Geschwindigkeits-Sollwert hinaus beschleunigen. Durch ein Drücken des Hebels 32 in Gegenfahrtrichtung 36 verlangsamt der Fahrer die Geschwindigkeit seines Fahrzeugs. Dabei führt der Fahrer über das Betätigen des Hebels 32 aber keine Korrektur des von ihm vorgegebenen Geschwindigkeits-Sollwerts durch, noch führt eine Betätigung des Hebels 32 zu einer Deaktivierung der Geschwindigkeitssteuervorrichtung. Unterlässt der Fahrer für ein vorgebbares Zeitintervall eine Betätigung des Hebels 32, so stellt die Geschwindigkeitssteuervorrichtung die Fahrzeuggeschwindigkeit automatisch wieder auf den vorgegebenen Geschwindigkeits-Sollwert ein.

Möchte der Fahrer die Geschwindigkeitssteuervorrichtung ganz deaktivieren, so kann er dies durch ein Bewegen eines Hebels 38 in Pfeilrichtung 40 ausführen. Dabei ist es ausreichend, dass der Fahrer den Hebel 38 wie in Figur 2 gezeigt nur um eine kleine, dem Fahrer vorzugsweise durch einen Druckpunkt angezeigte Auslenkung in die Pfeilrichtung 40 parallel zur Ebene des Lenkrads 26 bewegt. Nach einer Deaktivierung der Geschwindigkeitssteuervorrichtung wird die Geschwindigkeit des Fahrzeugs nur noch durch den Fahrer gesteuert.

In Figur 2 ist noch eine mit dem Wort RESUME gekennzeichnete Taste 30 zu erkennen. Über diese Taste 30 kann der Fahrer nach einer Deaktivierung der Geschwindigkeitssteuervorrichtung, beispielsweise durch Betätigen des Hebels 38 in Pfeilrichtung 40, die Geschwindigkeitssteuervorrichtung erneut aktivieren. Die Geschwindigkeitssteuervorrichtung übernimmt nach einer Aktivierung über Taste 30 automatisch den Geschwindigkeits-Sollwert, welcher ihr zuletzt vor ihrer Deaktivierung vorgegeben wurde.

Als weitere Möglichkeit den aktuellen Geschwindigkeits-Sollwert zu verändern stellen die Druckschriften DE 100 41 745 A1 und DE 198 50 686 A1 eine Geschwindigkeitssteuervorrichtung vor, bei welcher der Fahrer über eine Eingabeeinrichtung mindestens zwei Geschwindigkeitswerte eingeben kann. Je nach der aktuellen Verkehrssituation kann der Fahrer die Geschwindigkeitssteuervorrichtung dann für einen dieser Geschwindigkeitswerte aktivieren.

Allerdings ist die Anwendung einer Geschwindigkeitssteuervorrichtung, wie sie in den Druckschriften DE 100 41 745 A1 und DE 198 50 686 A1 vorgestellt wird, mit dem Risiko verbunden, dass der Fahrer in Bezug auf die aktuelle Verkehrssituation einen zu hohen oder zu niedrigen Geschwindigkeits-Sollwert aktiviert. In beiden Fällen führt dies dazu, dass sich das Fahrzeug in seiner von der Geschwindigkeitssteuervorrichtung gehaltenen Geschwindigkeit nicht an den aktuellen Verkehrsstrom anpasst. Wird dieser Fehler nicht zeitig korrigiert, so ist dies mit einem hohen Unfallrisiko verbunden.

Die gattungsbildende DE 101 45 915 A1 betrifft ein Verfahren und eine Einrichtung zum automatischen Steuern einer Geschwindigkeit eines Kraftfahrzeugs. Sobald eine konstante Geschwindigkeit durch das betreffende Kraftfahrzeug für eine vorgegebene Zeitdauer während einer Fahrt eingehalten wird, übernimmt die Einrichtung die betreffende Geschwindigkeit als Sollgeschwindigkeit. Die Einrichtung steuert daraufhin das Fahrzeug so, dass es mit der vorgegebenen Sollgeschwindigkeit fährt, ohne dass ein Fahrer ein Gas- oder Bremspedal betätigen muss. Erfolgt von Seiten des Fahrers eine Eingabe zu einer größeren Geschwindigkeitsänderung, so wird die Einrichtung automatisch deaktiviert.

Die Aufgabe der vorliegenden Erfindung besteht deshalb darin, einem Fahrer bei einer automatisch geregelten Fahrgeschwindigkeit seines Fahrzeugs eine vorteilhaftere Möglichkeit zur Reaktion auf eine veränderte Verkehrssituation zu bieten.

Die Aufgabe wird erfindungsgemäß durch die im Anspruch 1 genannten Merkmale gelöst.

Die Erfindung basiert auf der Erkenntnis, dass der Fahrer bei der Aktivierung der Geschwindigkeitssteuervorrichtung die Verkehrssituation oft falsch einschätzt und die Geschwindigkeitssteuervorrichtung aus diesem Grund für einen zu hohen oder zu niedrigen Geschwindigkeitswert aktiviert. Das konstante Einhalten eines in Bezug auf die aktuelle Verkehrssituation zu hohen oder zu niedrigen Geschwindigkeitswerts durch die Geschwindigkeitssteuervorrichtung kann sich dann störend auf die Gesamtverkehrssituation auswirken. Korrigiert der Fahrer daraufhin nicht schnell seine Falscheingabe, so kann dies zu einem Unfall führen. Um einen derartigen Unfall zu vermeiden, muss eine Geschwindigkeitssteuervorrichtung so ausgelegt sein, dass sich eine Aktivierung der Geschwindigkeitssteuervorrichtung mit einem für die jeweilige Verkehrssituation zu hoch oder zu niedrig vorgegebenen Wert verhindern oder schnell korrigieren lässt. Diese Aufgabe wird durch die hier vorgestellte Geschwindigkeitssteuervorrichtung gelöst, indem sie eine Geschwindigkeits-Sollwert-Ermittlungseinrichtung umfasst, welche einen Geschwindigkeits-Sollwert bereitstellt, der auf den vom Fahrzeug innerhalb eines vorgebbaren Zeitintervalls gefahrenen Geschwindigkeiten beruht und damit, sofern die mittlere Geschwindigkeit des Verkehrsstroms während des Zeitintervalls der mittleren Geschwindigkeit des Verkehrsstroms nach der Aktivierung des Geschwindigkeits-Sollwerts entspricht, an die jeweilige Verkehrssituation angepasst ist.

Dabei umfasst eine Eingabeeinrichtung der Geschwindigkeitssteuervorrichtung eine Eingabekomponente, über welche die Steuereinrichtung nach einer Aktivierung der Geschwindigkeitssteuervorrichtung für einen Geschwindigkeits-Sollwert durch den Fahrer so steuerbar ist, dass während einer Betätigungsdauer der Eingabekomponente die Steuereinrichtung die Geschwindigkeit des Fahrzeugs gegenüber einer bei Beginn einer Betätigung von dem Fahrzeug gefahrenen Geschwindigkeit um eine vorgebbare Geschwindigkeitsdifferenz kontinuierlich verringert und beginnend mit einem Abbruch der Betätigung der Eingabekomponente die Steuereinrichtung die Geschwindigkeit des Fahrzeugs wieder auf den vorgebbaren Geschwindigkeits-Sollwert einstellt. Im Unterschied zur schon beschriebenen SPEED UP/DOWN Funktion kann der Fahrer somit den Zeitpunkt der Wiedereinstellung des vorgegebenen Geschwindigkeits-Sollwerts genau bestimmen, indem er die Eingabekomponente so lange betätigt, bis er für sein Fahrzeug den Geschwindigkeits-Sollwert wieder als Fahrgeschwindigkeit wünscht. Damit bietet sich dem Fahrer eine Möglichkeit an, in bestimmten Situationen, beispielsweise bei einer Fahrt durch eine Kurve, die Geschwindigkeit seines Fahrzeugs kurzzeitig zu verringern, ohne dass er dazu erst die Geschwindigkeitssteuervorrichtung deaktivieren oder für einen niedrigeren Geschwindigkeitswert aktivieren muss. Der Fahrer hat damit eine Möglichkeit, seine Geschwindigkeit schnell und ohne großen Betätigungsaufwand an ein gewisses Verkehrshindernis anzupassen.

Zusätzlich kann die Geschwindigkeitssteuervorrichtung eine Eingabeeinrichtung umfassen, welche ausgelegt ist zur Vorgabe eines Geschwindigkeits-Sollwerts durch den Fahrer, wobei die Bereitstellung entweder des von der Geschwindigkeits-Sollwert-Ermittlungseinrichtung ermittelten Geschwindigkeits-Sollwerts oder des vom Fahrer vorgegebenen Geschwindigkeits-Sollwerts an die Steuereinrichtung von einer Eingabe durch den Fahrer abhängig ist. Unter einer Vorgabe eines Geschwindigkeits-Sollwerts fällt dabei sowohl das Bestimmen eines vom Fahrzeug gefahrenen Geschwindigkeitswerts als Geschwindigkeits-Sollwert, als auch das Eingeben eines neuen Geschwindigkeitswerts, beispielsweise über eine an der Eingabeeinrichtung angebrachte Tastatur. Damit kann der Fahrer zusätzlich zu dem von der Geschwindigkeits-Sollwert-Ermittlungseinrichtung ermittelten Geschwindigkeits-Sollwert noch mindestens einen weiteren Geschwindigkeits-Sollwert über die Eingabeeinrichtung ein- oder vorgeben. Abhängig von der Verkehrssituation kann der Fahrer dann aus den verschiedenen Geschwindigkeits-Sollwerten den Wert auswählen, bei dem ein besseres Anpassen an den Verkehrsstrom oder an seine Fahrgewohnheiten gewährleistet ist. Über die Eingabeeinrichtung kann der Fahrer die Geschwindigkeitssteuervorrichtung zuerst für einen von ihm vorgegebenen Geschwindigkeits-Sollwert aktivieren und diesen dann nach einer bestimmten Fahrzeit durch einen von der Geschwindigkeits-Sollwert-Ermittlungseinrichtung ermittelten Geschwindigkeits-Sollwert ersetzen und somit das Unfallrisiko verringern.

Bevorzugt kann die Geschwindigkeits-Sollwert-Ermittlungseinrichtung so ausgelegt sein, dass sie aus den während des vorgebbaren Zeitraums gefahrenen Geschwindigkeiten einen Mittelwert als Geschwindigkeits-Sollwert ermittelt. Aktiviert der Fahrer dann die Geschwindigkeitssteuervorrichtung für ein konstantes Einhalten dieses Geschwindigkeits-Sollwerts, so passt sich das Fahrzeug damit optimal an den aktuellen Verkehrsstrom oder an die Fahrweise des Fahrers an.

Weiterhin kann die Geschwindigkeits-Sollwert-Ermittlungseinrichtung so ausgelegt sein, dass sie aus den während des vorgebbaren Zeitraums gefahrenen Geschwindigkeiten einen am längsten gefahrenen Geschwindigkeitswert als Geschwindigkeits-Sollwert ermittelt. Auch ein Übernehmen eines auf diese Weise für eine bestimmte Verkehrssituation ermittelten Geschwindigkeits-Sollwerts ermöglicht ein gutes Anpassen an die Verkehrssituation, solange sich diese nicht ändert.

Vorteilhafterweise kann die Geschwindigkeits-Sollwert-Ermittlungseinrichtung so ausgelegt sein, dass sie eine von dem Fahrzeug über den vorgebbaren Zeitraum innerhalb eines vorgebbaren Toleranzbereichs eingehaltene Geschwindigkeit als Geschwindigkeits-Sollwert ermittelt. Dies hat den Vorteil, dass die Geschwindigkeits-Sollwert-Ermittlungseinrichtung nur dann einen Geschwindigkeits-Sollwert bereitstellt, wenn die Verkehrssituation sich zum Einhalten einer konstanten Geschwindigkeit eignet. Verlangt die Verkehrssituation hingegen vom Fahrer ein häufiges Abbremsen und Beschleunigen, so stellt die Geschwindigkeits-Sollwert-Ermittlungseinrichtung keinen Geschwindigkeits-Sollwert bereit und übermittelt damit dem Fahrer, dass die Verkehrssituation für eine Aktivierung der Geschwindigkeitssteuervorrichtung mit einem konstant gehaltenen Geschwindigkeits-Sollwert nicht geeignet ist.

Die oben genannte Aufgabe wird erfindungsgemäß auch gelöst durch ein Verfahren zum Steuern der Geschwindigkeit eines Fahrzeugs nach Anspruch 7. Die im Zusammenhang mit der erfindungsgemäßen Vorrichtung erwähnten Vorteile gelten, soweit anwendbar, auch für das erfindungsgemäße Verfahren und seine bevorzugten Ausführungsformen.

Die Erfindung wird im Folgenden anhand der beiliegenden Zeichnungen, die sich auf eine Ausführungsform der Erfindung beziehen, beschrieben. Es zeigen:
- Figur 1:: eine erfindungsgemäße Geschwindigkeitssteuervorrichtung;
- Figur 2:: ein Lenkrad mit einer Eingabeeinrichtung zur Steuerung einer erfindungsgemäßen Geschwindigkeitssteuervorrichtung durch einen Fahrer; und
- Figur 3:: ein Blockdiagramm zur Verdeutlichung des erfindungsgemäßen Verfahrens.

In Figur 1 sind die einzelnen Komponenten einer erfindungsgemäßen Geschwindigkeitssteuervorrichtung mit einer Eingabeeinrichtung 10, einer Geschwindigkeitserfassungseinrichtung 14, einer Geschwindigkeits-Sollwert-Ermittlungseinrichtung 18 und einer Steuereinrichtung 12 skizziert. Nach einer Aktivierung der Geschwindigkeitssteuervorrichtung für einen ersten Geschwindigkeits-Sollwert 20b über die Eingabeeinrichtung 10 erfasst die Geschwindigkeitserfassungseinrichtung 14 die vom Fahrzeug gefahrene Geschwindigkeit und stellt ein entsprechendes Geschwindigkeitssignal 16 bereit. Über dieses Geschwindigkeitssignal 16 vergleicht die Geschwindigkeits-Sollwert-Ermittlungseinrichtung 18 die vom Fahrzeug gefahrene Geschwindigkeit mit dem Geschwindigkeits-Sollwert 20b, für den die Geschwindigkeitssteuervorrichtung aktiviert wurde. Der Vergleich ist notwendig, denn die Eingabeeinrichtung weist eine Betätigungskomponente auf, über welche die Geschwindigkeit des Fahrzeugs verändert werden kann, ohne dass der Geschwindigkeits-Sollwert 20b geändert oder die Geschwindigkeitssteuervorrichtung deaktiviert wird. Ist die vom Fahrzeug gefahrene Geschwindigkeit mit dem Geschwindigkeits-Sollwert 20b nicht identisch und wird diese Geschwindigkeit über einen vorgebbaren Zeitraum vom Fahrzeug innerhalb eines vorgebbaren Toleranzbereichs gehalten, so gibt die Geschwindigkeits-Sollwert-Ermittlungseinrichtung 18 diesen Geschwindigkeitswert als Geschwindigkeits-Sollwert 20a an die Steuereinrichtung 12 aus.

Über die Eingabeeinrichtung 10 kann der Fahrer die Geschwindigkeitssteuervorrichtung für den von der Geschwindigkeits-Sollwert-Ermittlungseinrichtung 18 ermittelten Geschwindigkeits-Sollwert 20a aktivieren. Alternativ kann der Fahrer nach einer Aktivierung der Geschwindigkeitssteuervorrichtung für den von der Geschwindigkeits-Sollwert-Ermittlungseinrichtung 18 ermittelten Geschwindigkeits-Sollwert 20a die Geschwindigkeitssteuervorrichtung für einen von dem Fahrer vorgegebenen Geschwindigkeits-Sollwert 20b aktivieren, wie es durch Pfeil 21 in Figur 1 angedeutet wurde.

Die Eingabeeinrichtung 10 umfasst zusätzlich noch eine Betätigungskomponente 22, über welche der Fahrer nach einer Aktivierung der Geschwindigkeitssteuervorrichtung für einen Geschwindigkeits-Sollwert 20a oder 20b die Geschwindigkeit seines Fahrzeugs um eine vorgebbare Geschwindigkeitsdifferenz 24 kontinuierlich verringern kann. Dabei ist die als Break-Funktion bezeichnete Geschwindigkeitsreduzierung so ausgelegt, dass die vorgebbare Geschwindigkeitsdifferenz 24 größer als die vorgebbare Geschwindigkeitsdifferenz der SPEED UP/DOWN- Funktion ist und während einer Betätigungsdauer der Betätigungskomponente 22 der niedrigere Geschwindigkeitswert von der Geschwindigkeitssteuervorrichtung gehalten wird und nach einer erfolgten Betätigung der Betätigungskomponente 22 die Geschwindigkeit des Fahrzeugs automatisch wieder auf den Geschwindigkeits-Sollwert 20a oder 20b erhöht wird, für welchen die Geschwindigkeitssteuervorrichtung vor der Betätigung der Betätigungskomponente 22 aktiviert wurde.

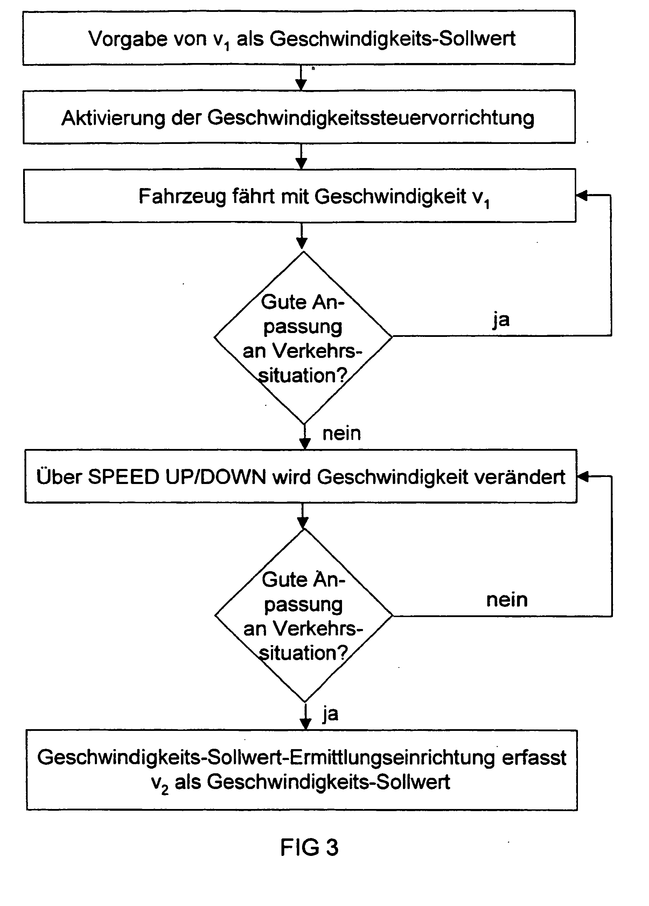

In Figur 3 ist in einem Blockdiagramm dargestellt, wie sich über das in der vorliegenden Erfindung beschriebene Verfahren ein einer Verkehrssituation entsprechender Geschwindigkeits-Sollwert für die Geschwindigkeitssteuervorrichtung ermitteln lässt. Zuerst gibt der Fahrer der Geschwindigkeitssteuervorrichtung einen Geschwindigkeitswert V₁ als Geschwindigkeits-Sollwert vor. Dann aktiviert er die Geschwindigkeitssteuervorrichtung. Im Tachometer des Fahrzeugs erscheint daraufhin nahe an dem gewählten Geschwindigkeits-Sollwert V₁ ein erstes Leuchtsignal, um den Fahrer an seine Geschwindigkeits-Sollwert-Vorgabe zu erinnern.

Die Geschwindigkeitssteuervorrichtung steuert die Fahrzeuggeschwindigkeit nach ihrer Aktivierung auf ein Einhalten der Geschwindigkeit v₁ innerhalb eines vorgebbaren Toleranzbereichs hin. Ist die Geschwindigkeit V₁ so gewählt, dass sie der mittleren Geschwindigkeit des Verkehrsstroms entspricht, so ist ein zusätzliches Eingreifen des Fahrers in die Geschwindigkeitssteuerung seines Fahrzeugs kaum nötig.

Es kann allerdings auch vorkommen, dass der Fahrer bei der Vorgabe des Geschwindigkeits-Sollwerts v₁ die Verkehrssituation falsch einschätzt oder eine Situationsänderung eine Änderung der Fahrzeuggeschwindigkeit erfordert. Eine gute Anpassung an die Verkehrssituation ist dann bei einem Fahren mit einer konstanten Geschwindigkeit von v₁ nicht gewährleistet. Will der Fahrer einen Unfall vermeiden oder möchte er die Fahrt mit einer konstanter Geschwindigkeit V₁ kurzzeitig unterbrechen um beispielsweise ein anderes Fahrzeug zu überholen, so bietet sich eine Korrektur der Fahrzeuggeschwindigkeit, beispielsweise über die schon beschriebene SPEED UP/DOWN Funktion an.

Die Geschwindigkeitssteuervorrichtung erspart dem Fahrer dabei einen zusätzlichen Betätigungsaufwand, indem sie es registriert, wenn das Fahrzeug für einen vorgebbaren Zeitraum innerhalb eines vorgebbaren Toleranzbereichs auf einem von V₁ verschiedenen Geschwindigkeitswert V₂ gehalten wird. Der jeweilige Geschwindigkeitswert V₂ ist dann für die aktuelle Verkehrssituation als Geschwindigkeits-Sollwert besser geeignet als V₁. Wird ein als Geschwindigkeits-Sollwert geeigneter Geschwindigkeitswert ermittelt, so informiert die Geschwindigkeitssteuervorrichtung den Fahrer durch ein zweites Leuchtsignal in der Geschwindigkeitsskala des Tachometers des Fahrzeugs, welches nahe an dem Geschwindigkeitswert v₂ erscheint. Zur besseren Unterscheidung mit dem ersten Leuchtsignal ist für einen Betrachter beim Vergleich der beiden Leuchtsignale ein deutlicher Farbunterschied erkennbar.

Durch das zweite Leuchtsignal wird der Fahrer aufgefordert, die Geschwindigkeitssteuervorrichtung für den von der Geschwindigkeitssteuervorrichtung ermittelten Geschwindigkeitswert v₂ zu aktivieren. Der Fahrer kann der Aufforderung nachkommen und die Geschwindigkeitssteuervorrichtung steuert die Fahrzeuggeschwindigkeit dann auf ein Einhalten innerhalb eines vorgebbaren Toleranzbereichs des von ihr ermittelten Geschwindigkeitswerts v₂ hin.

Aufgrund der Tatsache, dass der von der Geschwindigkeitssteuervorrichtung ermittelte Geschwindigkeits-Sollwert v₂ besser an die aktuelle Verkehrssituation angepasst ist, als der zuvor vom Fahrer vorgegebene Geschwindigkeits-Sollwert v₁, gewährleistet eine Aktivierung der Geschwindigkeitssteuervorrichtung für den ermittelten Geschwindigkeits-Sollwert V₂ ein sichereres und weniger betätigungsaufwendiges Fahren für den Fahrer.

Die in Figur 2 gezeigte Eingabeeinrichtung dient zur Steuerung einer erfindungsgemäßen Geschwindigkeitssteuervorrichtung, wie sie in den bisherigen Beispielen beschrieben wurde. Da die der Eingabeeinrichtung aus Figur 2 zugehörige Geschwindigkeitssteuervorrichtung nach ihrer Aktivierung für einen Geschwindigkeits-Sollwert das Einhalten eines vom Geschwindigkeits-Sollwert verschiedenen Geschwindigkeitswerts für einen vorgebbaren Zeitraum registriert und den Fahrer dann zu einer Übernahme des Geschwindigkeitswerts als Geschwindigkeits-Sollwert auffordert, umfasst die Eingabeeinrichtung auch mit der Taste 30 eine Betätigungskomponente, durch deren Betätigung der Fahrer zwischen den beiden Geschwindigkeits-Sollwerten hin- und herschalten kann. Wird nach einer Aktivierung der Geschwindigkeitssteuervorrichtung für einen der beiden Geschwindigkeits-Sollwerte die mit RESUME gekennzeichnete Taste 30 gedrückt, so wird die Geschwindigkeitssteuervorrichtung für den anderen Geschwindigkeits-Sollwert aktiviert. Dieses Verfahren lässt sich beliebig oft wiederholen.

Zu einer weiteren, erfindungsgemäßen Veränderung des von der Geschwindigkeitssteuervorrichtung eingestellten Geschwindigkeitswerts dient der schon erwähnte Hebel 38. Drückt der Fahrer den Hebel 38 über den erwähnten Druckpunkt in Pfeilrichtung 42 parallel zur Lenkradebene weiter, so kann er eine als BREAK- Funktion bezeichnete Geschwindigkeitssteuerfunktion aktivieren. Die Geschwindigkeitssteuervorrichtung verlangsamt dann die Fahrzeuggeschwindigkeit um eine vorgebbare Geschwindigkeitsdifferenz kontinuierlich so lange, wie der Hebel 38 vom Fahrer gedrückt bleibt. Befindet sich der Hebel 38 nach einer Betätigung wieder in seiner Ruheposition, so erhöht die Geschwindigkeitssteuervorrichtung die Geschwindigkeit des Fahrzeugs wieder auf den eingestellten Geschwindigkeits-Sollwert.

Die hier geschilderten Beispiele stellen nur einige mögliche Anwendungsformen der vorliegenden Erfindung dar. Möglich ist beispielsweise auch die Verwendung einer Geschwindigkeitssteuervorrichtung, die schon vor ihrer Aktivierung für einen bestimmten Geschwindigkeitswert die vom Fahrzeug gefahrenen Geschwindigkeiten registriert. Die Geschwindigkeitssteuervorrichtung kann dann dem Fahrer in bestimmten Situationen mit einem geeigneten Geschwindigkeits-Sollwert an eine mögliche Aktivierung der Geschwindigkeitssteuervorrichtung zur Einstellung der Fahrzeuggeschwindigkeit erinnern.

## Patentansprüche

1. Geschwindigkeitssteuervorrichtung für ein Fahrzeug, umfassend:
eine Geschwindigkeitserfassungseinrichtung (14) zur Erfassung einer Geschwindigkeit des Fahrzeugs und zur Bereitstellung eines entsprechenden Geschwindigkeitssignals (16) an ihrem Ausgang,
eine Steuereinrichtung (12), die ausgelegt ist, die Geschwindigkeit des Fahrzeugs gemäß einem vorgebbaren Geschwindigkeits-Sollwert (20a) einzustellen und
eine Geschwindigkeits-Sollwert-Ermittlungseinrichtung (18), die an den Ausgang der Geschwindigkeitserfassungseinrichtung (14) gekoppelt ist und die ausgelegt ist, aus dem während eines vorgebbaren Zeitraums erfassten Geschwindigkeitssignal (16) den Geschwindigkeits-Sollwert (20a) zu ermitteln und an die Steuereinrichtung (12) bereitzustellen,
**dadurch gekennzeichnet,**
**dass** sie weiterhin umfasst:
eine Eingabeeinrichtung mit einer Eingabekomponente (22,38), über welche die Steuereinrichtung (12) nach einer Aktivierung der Geschwindigkeitssteuervorrichtung für einen Geschwindigkeits-Sollwert durch den Fahrer so steuerbar ist, dass während einer Betätigungsdauer der Eingabekomponente (22,38) die Steuereinrichtung (12) die Geschwindigkeit des Fahrzeugs gegenüber einer bei Beginn einer Betätigung von dem Fahrzeug gefahrenen Geschwindigkeit um eine vorgebbare Geschwindigkeitsdifferenz (24) kontinuierlich verringert und beginnend mit einem Abbruch der Betätigung der Eingabekomponente (22,38) die Steuereinrichtung (12) die Geschwindigkeit des Fahrzeugs wieder auf den vorgebbaren Geschwindigkeits-Sollwert (20a) einstellt.

2. Geschwindigkeitssteuervorrichtung nach Anspruch 1, **dadurch gekennzeichnet, dass** die Eingabeeinrichtung (10) ausgelegt ist zur Vorgabe eines Geschwindigkeits-Sollwerts (20b) durch den Fahrer, und wobei die Bereitstellung entweder des von der Geschwindigkeits-Sollwert-Ermittlungseinrichtung (18) ermittelten Geschwindigkeits-Sollwerts (20a) oder des vom Fahrer vorgegebenen Geschwindigkeits-Sollwerts (20b) an die Steuereinrichtung (12) von einer Eingabe durch den Fahrer abhängig ist.

3. Geschwindigkeitssteuervorrichtung nach Anspruch 1 oder 2, **dadurch gekennzeichnet, dass** die Geschwindigkeits-Sollwert-Ermittlungseinrichtung (18) so ausgelegt ist, dass sie aus den während des vorgebbaren Zeitraums gefahrenen Geschwindigkeiten einen Mittelwert als Geschwindigkeits-Sollwert (20a) ermittelt.

4. Geschwindigkeitssteuervorrichtung nach Anspruch 1 oder 2, **dadurch gekennzeichnet, dass** die Geschwindigkeits-Sollwert-Ermittlungseinrichtung (18) so ausgelegt ist, dass sie aus den während des vorgebbaren Zeitraums gefahrenen Geschwindigkeiten einen am längsten gefahrenen Geschwindigkeitswert als Geschwindigkeits-Sollwert (20a) ermittelt.

5. Geschwindigkeitssteuervorrichtung nach Anspruch 1 oder 2, **dadurch gekennzeichnet, dass** die Geschwindigkeits-Sollwert-Ermittlungseinrichtung (18) so ausgelegt ist, dass sie eine von dem Fahrzeug über den vorgebbaren Zeitraum innerhalb eines vorgebbaren Toleranzbereichs eingehaltene Geschwindigkeit als Geschwindigkeits-Sollwert (20a) ermittelt.

6. Geschwindigkeitssteuervorrichtung nach einem der Ansprüche 1 bis 5, **dadurch gekennzeichnet, dass** die Eingabekomponente (22,38) an einem Lenkrad (26) des Fahrzeugs angeordnet ist.

7. Verfahren zum Steuern einer Fahrzeuggeschwindigkeit durch Erfassen einer Geschwindigkeit eines Fahrzeugs,
Bereitstellen eines entsprechenden Geschwindigkeitssignals (16); und
Einstellen der Fahrzeuggeschwindigkeit nach einem vorgebbaren Geschwindigkeits-Sollwert (20a), wobei
ein erster Geschwindigkeits-Sollwert (20a) aus dem während eines vorgebbaren Zeitraums erfassten Geschwindigkeitssignal ermittelt und als Geschwindigkeits-Sollwerts(20a)bereitgestellt wird,
**dadurch gekennzeichnet, dass**
während einer Betätigungsdauer einer Eingabekomponente (22,38) die Geschwindigkeit des Fahrzeugs gegenüber einer bei Beginn einer Betätigung von dem Fahrzeug gefahrenen Geschwindigkeit um eine vorgebbare Geschwindigkeitsdifferenz (24) kontinuierlich verringert und
beginnend mit einem Abbruch der Betätigung der Eingabekomponente (22,38) die Geschwindigkeit des Fahrzeugs wieder auf den vorgebbaren Geschwindigkeits-Sollwert (20a) eingestellt wird.

8. Verfahren nach Anspruch 7, **dadurch gekennzeichnet, dass** mindestens ein zweiter Geschwindigkeits-Sollwert (20b) von einem Fahrer über eine Eingabeeinrichtung (10) vorgegeben wird und wobei das Bereitstellen entweder des aus dem während des vorgebbaren Zeitraums erfassten Geschwindigkeitssignals (16) ermittelten ersten Geschwindigkeits-Sollwerts (20a) oder des vom Fahrer vorgegebenen zweiten Geschwindigkeits-Sollwerts (20b) durch den Fahrer gesteuert wird.

9. Verfahren nach Anspruch 7 oder 8, **dadurch gekennzeichnet, dass** die Geschwindigkeits-Sollwert-Ermittlungseinrichtung (18) aus den während des vorgebbaren Zeitraums gefahrenen Geschwindigkeiten einen Mittelwert als erster Geschwindigkeits-Sollwert (20a) ermittelt, oder einen während des vorgebbaren Zeitraums am längsten gefahrenen Geschwindigkeitswert als erster Geschwindigkeits-Sollwert (20a) ermittelt, oder eine über den vorgebbaren Zeitraum eingehaltenen Geschwindigkeit als erster Geschwindigkeits-Sollwert (20a) ermittelt.

10. Verfahren nach einem der Ansprüche 7 bis 9, **dadurch gekennzeichnet, dass** ein Fahrer zum Betätigen der Eingabekomponente (22,38) für das kontinuierliche Verringern der von dem Fahrzeug gefahrenen Geschwindigkeit um die vorgebbare Geschwindigkeitsdifferenz (24) einen an einem Lenkrad (26) angebrachten Hebel (38) drückt und zum Erhöhen der Geschwindigkeit des Fahrzeugs auf den Geschwindigkeits-Sollwert (20a) den Hebel (38) wieder loslässt.

## Claims

1. Speed control apparatus for a vehicle, comprising:
a speed detecting device (14) for detecting the speed of the vehicle and providing a corresponding speed signal (16) at its output,
a control device (12) designed to adjust the speed of the vehicle to a presettable required speed (20a), and
a required-speed determination device (18) which is coupled to the output of the speed detecting device (14) and is designed to determine the required speed (20a) from the speed signal (16) detected during a presettable time interval and to supply this value to the control device (12),
**characterized in that**
it moreover comprises:
an input device with an input component (22, 38) by means of which the control device (12) can be controlled by the driver, after an activation of the speed control apparatus for a required speed, so that during an operating period of the input component (22, 38) the control device (12) continuously reduces the speed of the vehicle by a presettable speed difference (24) with respect to the speed at which the vehicle was travelling at the start of an operation, and commencing upon termination of the operation of the input component (22, 38) the control device (12) again adjusts the speed of the vehicle to the presettable required speed (20a).

2. Speed control apparatus according to Claim 1, **characterized in that** the input device (10) is designed to allow a required speed (20b) to be set by the driver, and wherein an input by the driver determines whether it is the required speed (20a) determined by the required-speed determination device (18) or the required speed (20b) preset by the driver that is supplied to the control device (12).

3. Speed control apparatus according to Claim 1 or Claim 2, **characterized in that** the required-speed determination device (18) is designed to determine the mean value of the speeds at which the vehicle has travelled during the presettable time interval, as the required speed (20a).

4. Speed control apparatus according to Claim 1 or Claim 2, **characterized in that** the required-speed determination device (18) is designed to determine the speed at which the vehicle has travelled for longest of the speeds at which the vehicle has travelled during the presettable time interval, as the required speed (20a).

5. Speed control apparatus according to Claim 1 or Claim 2, **characterized in that** the required-speed determination device (18) is designed to determine a speed maintained by the vehicle within a presettable range of tolerance over the presettable time interval, as the required speed (20a).

6. Speed control apparatus according to any one of Claims 1 to 5, **characterized in that** the input component (23, 38) is arranged on the steering wheel (26) of the vehicle.

7. Method for controlling a vehicle speed by
detecting a speed of a vehicle,
providing a corresponding speed signal (16), and
adjusting the vehicle speed to a presettable required speed (20a), wherein
a first required speed (20a) is determined from the speed signal recorded during a presettable time interval and is supplied as the required speed (20a),
**characterized in that**
during an operating period of an input component (22, 38) the speed of the vehicle is continuously reduced by a presettable speed difference (24) with respect to the speed at which the vehicle was travelling at the start of an operation, and commencing upon termination of the operation of the input component (22, 38) the speed of the vehicle is again adjusted to the presettable required speed (20a).

8. Method according to Claim 7, **characterized in that** at least one second required speed (20b) is preset by the driver via an input device (10), and wherein the driver controls whether it is the first required speed (20a) determined from the speed signal (16) recorded during the presettable time interval or the second required speed (20b) preset by the driver that is provided.

9. Method according to Claim 7 or Claim 8, **characterized in that** the required-speed determination device (18) determines the mean value of the speeds at which the vehicle has travelled during the presettable time interval as the first required speed (20a), or determines the speed at which the vehicle has travelled for longest during the presettable time interval as the first required speed (20a), or determines a speed maintained over the presettable time interval as the first required speed (20a).

10. Method according to any one of Claims 7 to 9, **characterized in that** to operate the input component (22, 38) for the continuous reduction in the speed at which the vehicle is travelling by the presettable speed difference (24), the driver presses on a lever (38) mounted on the steering wheel (26), and to increase the speed of the vehicle to the required speed (20a) he lets go of the lever (38) again.

## Revendications

1. Dispositif de contrôle de vitesse pour un véhicule comprenant : un dispositif de détection de la vitesse (14) pour la détection d'une vitesse d'un véhicule et pour la mise à disposition d'un signal de vitesse correspondant (16) à sa sortie, un dispositif de commande (12) conçu pour régler la vitesse du véhicule conformément à une valeur de consigne de la vitesse pouvant être prédéterminée (20a) et un dispositif de détermination de la valeur de consigne de la vitesse (18) qui est couplé à la sortie du dispositif de détection de la vitesse (14) et qui est conçu pour déterminer la valeur de consigne de la vitesse (20a) à partir d'un signal de vitesse (16) détecté pendant une période pouvant être prédéterminée et pour être fourni au dispositif de commande (12),
**caractérisé en ce**
**qu'**il comprend à l'avenir :
un dispositif de saisie avec un composant de saisie (22, 38) grâce auquel le dispositif de commande (12), après une activation du dispositif de contrôle de vitesse pour une valeur de consigne de la vitesse, est commandable par le conducteur de sorte que pendant une durée d'actionnement du composant de saisie (22, 38), le dispositif de commande (12) diminue en continu - d'une différence de vitesse (24) pouvant être prédéterminée - la vitesse du véhicule par rapport à une vitesse à laquelle roule ledit véhicule au début d'un actionnement et dès le début d'une interruption de l'actionnement du composant de saisie (22, 38), le dispositif de commande (12) règle la vitesse du véhicule à nouveau sur la valeur de consigne de la vitesse (20a) pouvant être prédéterminée.

2. Dispositif de contrôle de vitesse selon la revendication 1, **caractérisé en ce que** le dispositif de saisie (10) est conçu pour que le conducteur spécifie une valeur de consigne de la vitesse (20b), la mise à disposition ou bien de la valeur de consigne de la vitesse (20a) déterminée par le dispositif de détermination de la valeur de consigne de la vitesse (18) ou bien de la valeur de consigne de la vitesse (20b) prédéfinie par le conducteur sur le dispositif de commande (12) dépendant d'une saisie du conducteur.

3. Dispositif de contrôle de vitesse selon la revendication 1 ou 2, **caractérisé en ce que** le dispositif de détermination de la valeur de consigne de la vitesse (18) est conçu de sorte que, à partir des vitesses auxquelles roule le véhicule pendant la période pouvant être prédéterminée, il détermine une valeur moyenne comme valeur de consigne de la vitesse (20a).

4. Dispositif de contrôle de vitesse selon la revendication 1 ou 2, **caractérisé en ce que** le dispositif de détermination de la valeur de consigne de la vitesse (18) est conçu de sorte que, à partir des vitesses auxquelles roule le véhicule pendant la période pouvant être prédéterminée, il détermine la valeur de vitesse à laquelle le véhicule a roulé le plus longtemps comme valeur de consigne de la vitesse (20a).

5. Dispositif de contrôle de vitesse selon la revendication 1 ou 2, **caractérisé en ce que** le dispositif de détermination de la valeur de consigne de la vitesse (18) est conçu de sorte qu'il détermine une vitesse maintenue par le véhicule pendant une période pouvant être prédéterminée dans une zone de tolérance pouvant être prédéterminée comme valeur de consigne de la vitesse (20a).

6. Dispositif de contrôle de vitesse selon l'une des revendications 1 à 5, **caractérisé en ce que** le composant de saisie (22, 38) est disposé sur le volant (26) du véhicule.

7. Procédé de contrôle de la vitesse d'un véhicule au moyen de la détection d'une vitesse d'un véhicule, d'une mise à disposition d'un signal de vitesse correspondant (16) ; et d'un réglage de la vitesse du véhicule selon une valeur de consigne pouvant être prédéterminé (20a), une première valeur de consigne de la vitesse (20a) étant déterminée à partir du signal de vitesse détecté pendant une période pouvant être prédéterminée et étant mise à disposition en tant que valeur de consigne de la vitesse (20a),
**caractérisé en ce que**
pendant une durée d'actionnement d'un composant de saisie (22, 38) la vitesse du véhicule par rapport à une vitesse réalisée par ledit véhicule au début d'un actionnement est diminuée en continu d'une différence de vitesse pouvant être prédéterminée (24) et dès le début d'une interruption de l'actionnement du composant de saisie (22, 38), la vitesse du véhicule est à nouveau réglée sur la valeur de consigne de la vitesse (20a) pouvant être prédéterminée.

8. Procédé selon la revendication 7, **caractérisé en ce qu'**au moins une seconde valeur de consigne de vitesse (20b) est spécifiée par un conducteur au moyen d'un dispositif de saisie (10) et la mise à disposition d'ou bien la première valeur de consigne de la vitesse (20a) déterminée à partir du signal de vitesse (16) détecté pendant la période pouvant être prédéterminée ou bien de la seconde valeur de consigne de la vitesse (20b) prédéfinie par le conducteur étant commandée par le conducteur.

9. Procédé selon la revendication 7 ou 8, **caractérisé en ce que**, à partir des vitesses auxquelles roule le véhicule pendant la période pouvant être prédéterminée, le dispositif de détermination de la valeur de consigne de la vitesse (18) détermine une valeur moyenne comme valeur de consigne de la vitesse (20a), ou bien détermine la valeur de vitesse à laquelle le véhicule a roulé le plus longtemps comme première valeur de consigne de la vitesse (20a), ou bien détermine une vitesse maintenue pendant la période pouvant être prédéterminée comme première valeur de consigne de vitesse (20a).

10. Procédé selon l'une des revendications 7 à 9, **caractérisé en ce que**, pour l'actionnement d'un composant de saisie (22, 38) pour la diminution continue de la vitesse à laquelle roule le véhicule automobile d'une différence de vitesse pouvant être prédéterminée (24), un conducteur appuie sur un levier (38) reposant sur le volant (26) et que pour augmenter la vitesse du véhicule et passer à la valeur de consigne de la vitesse (20a) il relâche le levier (38).
